# EUROPEAN PATENT SPECIFICATION

(11) **EP 1 049 024 B1**
(45) Date of publication and mention of the grant of the patent: **28.08.2002**
(21) Application number: 99108349.4
(22) Date of filing: 28.04.1999
(51) Int. Cl.: G06F 15/78, G06F 5/06

(54) **Signal processing system and method**
Signalverarbeitungssystem und -verfahren
Système et procédé à traitement de signaux

(43) Date of publication of application: 02.11.2000
(73) Proprietor: Mitsubishi Electric Europe B.V., 40880 Ratingen (DE)
(72) Inventor: Berninger, Ralf, 40880 Ratingen (DE)
(74) Representative: Prüfer, Lutz H., Dipl.-Phys.

(56) References cited:
- EP-A- 0 560 020
- US-A- 4 079 456
- US-A- 4 638 451
- US-A- 5 752 073

## Description

The invention relates to a signal processing system and to a signal processing method and in particular to such a system and such a method for use in an environment having a predetermined cycle time period and requiring a data output and/or a data input every cycle time period, in particular a DECT environment as a real-time environment.

Many data processing systems have to operate in an environment having a predetermined cycle time period and requiring a data output and/or a data input every cycle time period as a so-called real-time environment. For instance, after receiving input data, the system has to process the input data according to its algorithm in order to provide the output data after a certain maximum processing time period that should not be exceeded, either because the following device requires the output data and/or because the next input data has to be processed. If the processing performance required to perform the processing within this predetermined processing time period is constant over the time, in other words if the peak processing performance equals the average processing performance necessary, the peak processing performance has to be supplied by the data processing system permanently. However, in many applications the processing performance required for the data processing in such a real-time environment differs over the time, for instance depending on the input data and/or the internal state of the processing system. Conventionally, the longest possible processing path had to be detected, and the peak processing performance of the data processing system required for this longest processing path was permanently supplied by the system, to make sure that the response requirements were not violated. If the peak processing performance necessary for the longest processing path is significantly larger than the processing performance necessary for the average processing, a significant amount of processing performance is reserved just for the usually rare occurrence of the longest processing path. The provision of the larger peak processing performance requires a larger chip area and results in a higher power consumption as well as higher production costs.

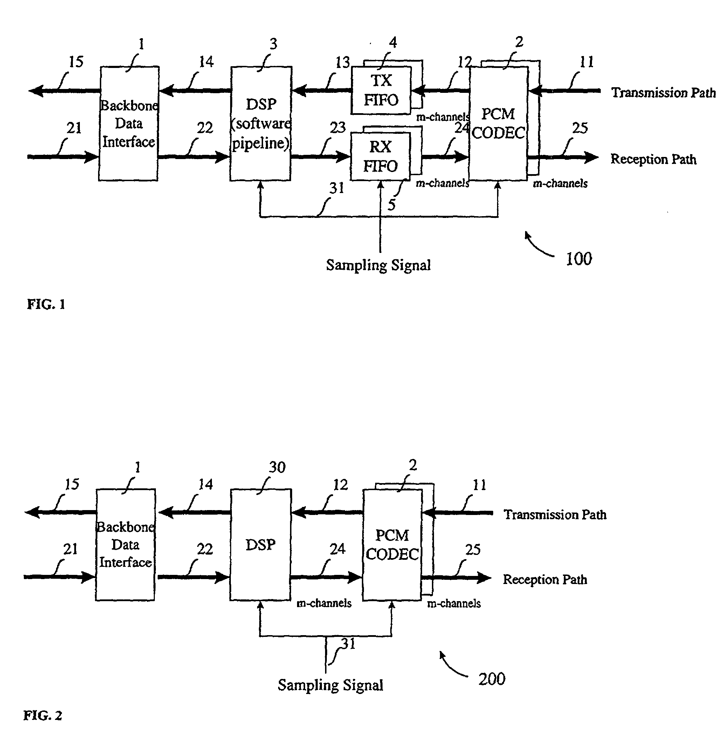

An example for a real-time environment having differences in the peak processing performance and the average processing performance necessary is a DECT (Digital Enhanced Cordless Telephone) system including subband DTMF (Dual Tone MultiFrequency) detection. A prior art data processing system 200 for a transceiver (transmitter/receiver) in such a DECT system including a subband DTMF detection is shown in Fig. 2. The system 200 includes a data interface 1 for a DECT backbone, a digital signal processor (DSP) 30 and a PCM CODEC 2. The DSP 30 is connected to the backbone data interface 1 via an input connection 22 and an output connection 14 and to the PCM CODEC 2 via an output connection 24 and an input connection 12. The input and output connections 12, 24 to the PCM CODEC 2 include m channels corresponding to the m channels of the corresponding PCM CODEC 2 connected to the further circuitry (not shown) of the DECT end station (handset or the like) via an output connection 11 and an input connection 25, each having m channels as well. The DSP 30 and the PCM CODEC 2 receive the sampling signal 31, having a frequency of 8 kHz.

The operation of the system 200 is explained for the transmission path 11, 2, 12, 30, 14, 1, 15 of the DECT system which is a TDMA (Time Division Multiple Access) system, as well known in the art. A DTMF signal can be used for signalling dial information or the like. A DTMF signal has a frequency in the range from about 700 Hz (697 Hz) to about 1.650 Hz (1.633 Hz). The sampling signal 31 of system 200 has a sample frequency of 8 kHz. However, to sample the DTMF signal, a sample frequency of about 3.3 kHz is sufficient to fulfil the Nyquist criterion. Thus, a so-called subband sampling of the DTMF signal in every second cycle time period is sufficient, resulting in a sampling frequency of 4 kHz. This is one reason for an inhomogenity of the processing in the DSP 30 in the prior art DECT system having a subband DTMF detection resulting in a so-called heterogeneous algorithm. Another reason are the inhomogenities, i.e. the heterogeneous characteristic of the processing algorithm of the DECT system itself even without a subband DTMF detection.

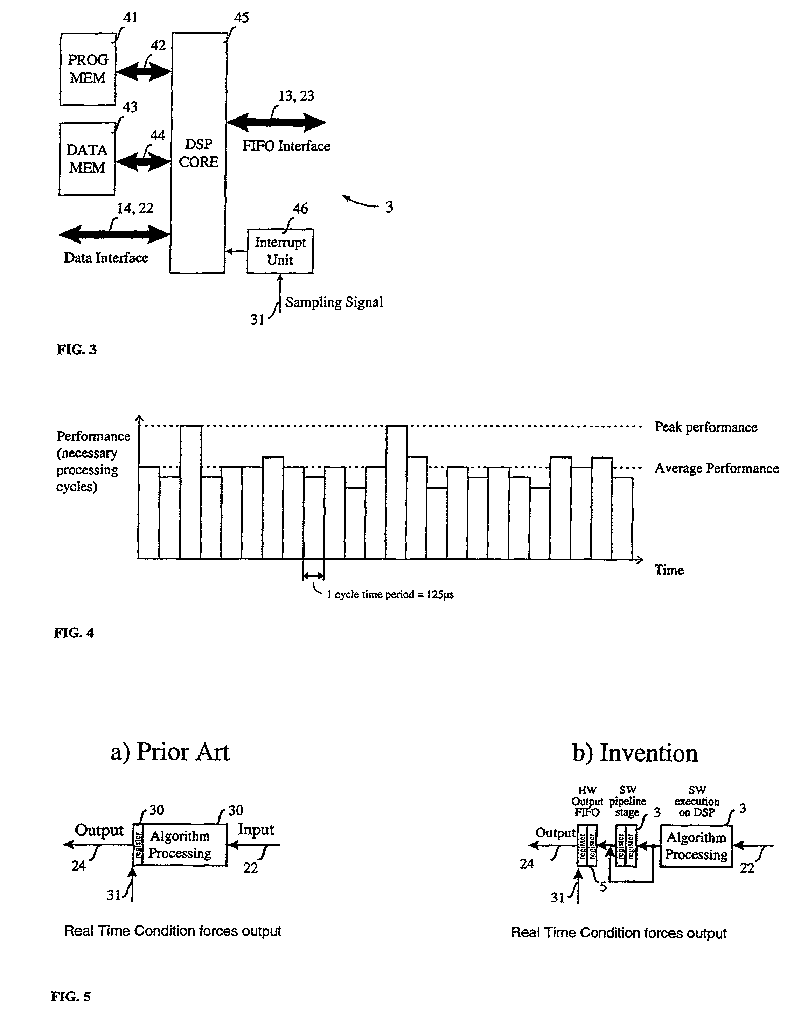

Fig. 4 shows a typical distribution of the necessary processing performance, i.e. the number of DSP processor cycles each of which is much shorter than one sample cycle, necessary to fully process the algorithm within one cycle time period (= 125 µs) of the sample cycles. The PCM CODEC 2 outputs one input data sample for the transmission path 11, 2, 12, 30, 14, 1, 15 every cycle time period. Therefore, the DSP 30 has to process every input data sample for the transmission path within one cycle time period, because otherwise data would be lost. On the other hand, the completion of the algorithm on the reception path side 21, 1, 22, 30, 24, 2, 25 is necessary because the PCM CODEC 2 requires the input of one data sample processed by the DSP every cycle time period of the sampling signal 31.

A system response requirement violation resulting in a data loss or a data flow interruption inmidst a data communication will be registered as an interruption by the user. Therefore, the prior art systems always supply the peak processing performance in order to avoid any system response requirement violation inmidst a data communication.

It is an object of the present invention, to relieve the requirements for the peak processing performance in such a data processing environment.

This object is achieved by a data processing system according to claim 1 and a data processing method according to claim 9 and claim 10, respectively.

Further developments of the invention are given in the dependent claims.

An additional propagation delay of data transmitted over the DECT system for some cycle time periods of the sampling signal is not critical, because a propagation delay of some hundred µs will not be registered by the user of the system. However, a system response requirement violation resulting in a data loss or a data flow interruption inmidst the data communication will be registered as an interruption by the user. Because of the provision of the memory means in the output data interconnection and/or the input data connection a time buffer of (n-1) cycle time periods for the processing tasks is build up. Therefore, any system response requirement violation can be prevented even if the first data processing means does not have a performance sufficient to process every input data sample within one cycle time period. As a result, it is possible to use a smaller and cheaper first data processing means than in the prior art systems always supplying the peak processing performance in order to avoid any system response requirement violation inmidst a data communication.

Further features and advantages will become apparent from the following description of a preferred embodiment referring to the drawings, of which:
- Fig. 1: shows a data processing system in accordance with preferred embodiment of the invention;
- Fig. 2: shows a prior art data processing system;
- Fig. 3: shows the DSP 3 of Fig. 1 in more detail;
- Fig. 4: shows a graph illustrating the necessary processing performance over the time;
- Fig. 5: shows in a) a scheme of the processing in the prior art system of Fig. 2, and in b) a scheme of the processing in the system of Fig. 1; and
- Fig. 6 A and B: show schematic the data processing for the reception path of plural samples in the system of Fig. 2 in a) and the system of Fig. 1 in c), if both systems have a maximum processing performance lower than the peak processing performance, along with a timing illustration in b).

A preferred embodiment of the invention is explained below referring to Fig. 1. As shown in Fig. 1, a data processing system 100 comprises a backbone data interface 1 connected to DECT backbone 15, 21 and a m-channel PCM CODEC 2 connected to further circuitry (not shown) receiving analog data via m channel connection 11 and supplying analog data via m channel connection 25, similar to the prior art system 200 of Fig. 2. In the following description, it is assumed that m=4, i.e. that 4 channels are encoded/decoded by a 4 channel PCM CODEC 2. However, depending on the system requirements another number of channels is of course possible. The system 100 includes a digital signal processor 3 which is connected to the backbone data interface 1 via an input connection 22 and an output connection 14. Furthermore, the DSP 3 is connected to a first n stage FIFO (First-In-First-Out-memory) 5 via an output connection 23 and to a second n stage FIFO 4 via an input connection 13. The FIFOs 4 and 5 each include m parallel FIFO instances of n stages. The connections 13 and 23 include address busses which enable an access of the DSP to the FIFOs 4, 5 corresponding to a m channel connection. The first FIFO 5 is connected to the m-channel PCM CODEC 2 via a m channnel output connection 24. The second FIFO 4 is connected to the m-channel PCM CODEC 2 via a m channel input connection 12. The DSP 3 includes a n stage data pipeline which will be explained later. In the present case the data pipeline is realized by software, that means the program run on the DSP 3 realizes the data pipeline using the data memory present in a conventional DSP. However, the data pipeline could of course be realized in hardware.

The DSP 3, the first FIFO 5 and the PCM CODEC 2 receive the sampling signal 31 having a frequency of 8 kHz.

As can be seen from a comparison of Fig. 1 and 2, the system 100 according to the preferred embodiment differs from the prior art system 200 of Fig. 2 essentially in the two FIFOs 4, 5 interconnected into the respective m channel connections between the DSP and the PCM CODEC 2, and the provision of the data pipeline in the DSP 3.

The DSP 3 of Fig. 1 is shown in more detail in Fig. 3. The DSP 3 has a program memory 41, a data memory 43, a DSP core 45 and an interrupt unit 46. DSP core 45 is connected to data memory 41 via a connection 42, to data memory 43 via a connection 44, to FIFOs 4, 5 via connections (FIFO interface) 13, 23, and to backbone data interface 1 via connections (data interface) 14, 22. Interrupt unit 46 receives the sampling signal 31. The DSP 3 is operated according to a programm stored in program memory 41 run in DSP core 45. The DSP 3 is in a sleep or stand-by mode, if no data have to be processed. The DSP 3 is activated for operation by an interrupt from interrupt unit 46, which generates an interrupt in response to a rising edge of sampling signal 31. The DSP 3 then operates according to an interrupt routine (series of instructions predetermined by the program and processed in reaction to an interrupt). After completing the interrupt routine, the DSP 3 returns to the sleep mode until the next interrupt. If the next interrupt occurs while the DSP 3 still processes the interrupt routine for the preceding interrupt, this next interrupt is hold but does not cancel the pending interrupt routine. The processing of the interrupt routine for the next interrupt is started after completion of the preceding interrupt, in other words the DSP 3 does not interleave or cancel interrupt routines.

A reception path in the data processing system 100 is formed by connections 21, 22, 23, 24 and 25, interface 1, DSP 3, FIFO 5, and PCM CODEC 2. A transmission path in the data processing system 100 is formed by connections 11, 12, 13, 14 and 15, PCM CODEC 2, FIFO 4, DSP 3, and interface 1.

The PCM CODEC 2 requires a data input for decoding in form of an input data sample for the reception path every cycle time period of the sampling signal 31. The PCM CODEC 2 outputs an encoded output data sample encoded for the transmission path every cycle time period. The term data sample is used for a data word having a predetermined size and format for input/output into or from the PCM CODEC 2, in the present case an 8-bit A-law or µ-law word

The operation of system 100 is explained for n=2. The input data for the reception path are delivered through the backbone connection 21. The backbone data interface 1 supplies input data for the reception path in form of one DECT input data slot via input connection 22 to DSP 3 in response to a corresponding request from DSP 3. A DECT data slot corresponds to a data frame of 10 ms corresponding to 80 input data samples for the reception path. These 80 input data samples for the reception path are stored in data memory 43 in DSP 3.

Correspondingly, 80 output data samples are buffered for each channel in the data memory 43.
The operation of the DSP is controlled via the interface 1. The algorithm applied to the DECT data and PCM data can be enabled/disabled for each of the m channels via interface 1. In the following description the operation of DSP 3 will be explained for one channel.

The operation of the DSP 3 for one channel is started in reaction to the first rising edge of sampling signal 31 when a channel is enabled via interface 1. Upon start of operation, DSP 3 performs a first processing step according to a first interrupt routine. At the beginning of the first cycle time period of the sampling signal 31 the DSP 3 builds up a temporary n-stage data pipeline in memory 43 (n=2), requests the transmission of a DECT input data slot from backbone interface 1, writes the input data slot in data memory 43, fetches the first input data sample for the reception path of the input data slot, processes this first input data sample and stores the resulting first output data sample for the receiption path in the first stage of the 2-stage data pipeline. FIFO 5 outputs a reset signal (or no data). No processing of input data for the transmission path is performed. Further, DSP 3 clears FIFO 4.

The processing of the first input data sample for the receiption path could be completed either before, or at, or after the end of the first cycle time period of sampling signal 31, because of the heterogeneous algorithm. The program run on DSP 3 starts the routine (interrupt routine) for fetching the second input data sample for the reception path from the input data slot in reaction to the interrupt generated in response to the second rising edge of the sampling signal 31. However, according to the preferred embodiment, a pending interrupt routine for processing input data is not interrupted by the next interrupt for processing data. Therefore, if the processing of the first input data sample is still pending when the second interrupt is generated, the routine for processing the first input data sample is completed, the already generated interrupt is buffered and the interrupt routine for processing the second input data sample for the reception path is started after completion of the pending routine.

At the beginning of the second cycle time period, FIFO 4 receives the first input data sample for the transmission path from PCM CODEC 2 and stores the same. FIFO 5 outputs a reset signal (or no data) to PCM CODEC 2. In a second processing step DSP 3 operates according to the second interrupt routine. DSP 3 fetches a second input data sample for the reception path from data memory 43 and processes the second input data sample for the reception path. After completion of the processing of the second input data sample for the reception path, i.e. either before, or at, or after the end of the second cycle time period, DSP 3 stores the result in the second stage of the data pipeline. No processing of input data for the transmission path is performed.

At the beginning of the third cycle time period, FIFO 4 receives the second input data sample for the transmission path from PCM CODEC 2 and stores the same. FIFO 5 outputs a reset signal (or no data) to PCM CODEC 2. In a third processing step DSP 3 operates according the the third interrupt routine. DSP 3 transfers the complete data pipeline content in order, i.e. the first and second output data samples for the receiption path to the 2-stage FIFO 5 via the output connection 23. FIFO 5 is controlled to store the first and second output data samples for the reception path in order. DSP 3 fetches the third input data sample for the reception path from data memory 43 and starts its processing immediately. After completion of the processing of the third input data sample for the reception path, i.e. either before, or at, or after the end of the third cycle time period, DSP 3 stores the result in the last stage of the data pipeline. DSP 3 fetches the first input data sample for the transmission path from FIFO 4, processes the first input data sample for the transmission path, and, after completion of the processing, i.e. either before, or at, or after the end of the third cycle time period, transfers the result to the data memory 43. DSP 3 performs the processing of data for the reception path and for the transmission path consecutively.

At the beginning of the fourth cycle time period, FIFO 4 receives the third input data sample for the transmission path from PCM CODEC 2 and stores the same. FIFO 5 outputs the first output data sample for the reception path to PCM CODEC 2. In a fourth processing step DSP 3 operates according the the fourth interrupt routine. DSP 3 transfers the content of the last stage of the data pipeline, i.e. the third output data sample for the receiption path, to the 2-stage FIFO 5 via the output connection 23. DSP 3 fetches the fourth input data sample for the receiption path from data memory 43 and starts its processing immediately. After completion of the processing of the fourth input data sample for the receiption path, i.e. either before, or at, or after the end of the fourth cycle time period, DSP 3 stores the result in the last stage of the data pipeline. DSP 3 fetches the second input data sample for the transmisson path from FIFO 4 and starts its processing immediately. After completion of the processing, i.e. either before, or at, or after the end of the fourth cycle time period, DSP 3 transfers the result to the data memory 43.

The operation and processing step of the fourth cycle time period are repeated for any further cycle time period. At the beginning of the k-th cycle time period (k being an integer equal to or larger than 4), FIFO 4 receives the (k-1)-th input data sample for the transmission path from PCM CODEC 2 and stores the same. FIFO 5 outputs the (k-3)-th output data sample for the receiption path to PCM CODEC 2. In a k-th processing step DSP 3 operates according the the k-th (=4th) interrupt routine. DSP 3 transfers the content of the last stage of the data pipeline, i.e. the (k-1)-th output data sample for the receiption path, to the 2-stage FIFO 5 via the output connection 23. DSP 3 fetches the k-th input data sample for the reception path from data memory 43 and starts its processing immediately. After completion of the processing of the k-th input data sample for the receiption path, i.e. either before, or at, or after the end of the k-th cycle time period, DSP 3 stores the result in the last stage of the data pipeline. DSP 3 fetches the (k-2)-th input data sample for the transmisson path from FIFO 4 and starts its processing immediately. After completion of the processing, i.e. either before, or at, or after the end of the k-th cycle time period, DSP 3 transfers the result to the data memory 43.

If the maximum processing performance of the DSP 3 is chosen lower than the peak performance necessary to process even the longest processing path within one cycle time period (refer to Fig. 4) but equal to or higher than the average performance necessary to process a large number of input data samples within a corresponding number of cycle time periods, the following effect results. Because of the propagation delay of the output data samples for the reception path for 2 cycle time periods, a "time buffer" of one cycle time period for the DSP 3 results. If an input data sample for the reception path requires a processing time exceeding the cycle time period, the DSP can continue the processing into the next cycle time period. Since the output data sample for the reception path expected by PCM CODEC 2 is already present in FIFO 5, no system response requirement violation occurs. If an input data sample for the transmission path requires a processing time exceeding the cycle time period, DSP 3 can continue the processing into the next cycle time period. Since the input data sample for the transmission path outputted by PCM CODEC 2 is stored in FIFO 4, no system response requirement violation occurs, in particular no data loss occurs. Because of the characteristics of the heterogeneous algorithm, one or more of the next processing tasks will take less processing time than the cycle time period resulting in a compensation of the former delay. Therefore, although DSP 3 has a lower maximum processing performance than the above-explained peak performance, no system response requirement violation occurs and only a negligible propagation delay of 2 cycle time periods on the reception path and on the transmission path results.

If the data processing system 100 is used in a DECT system including a subband DTMF detection, n equals preferably 2, as described above. The maximum performance of the DSP 3 is chosen to be equal to or a little bit higher than the average performance described above.

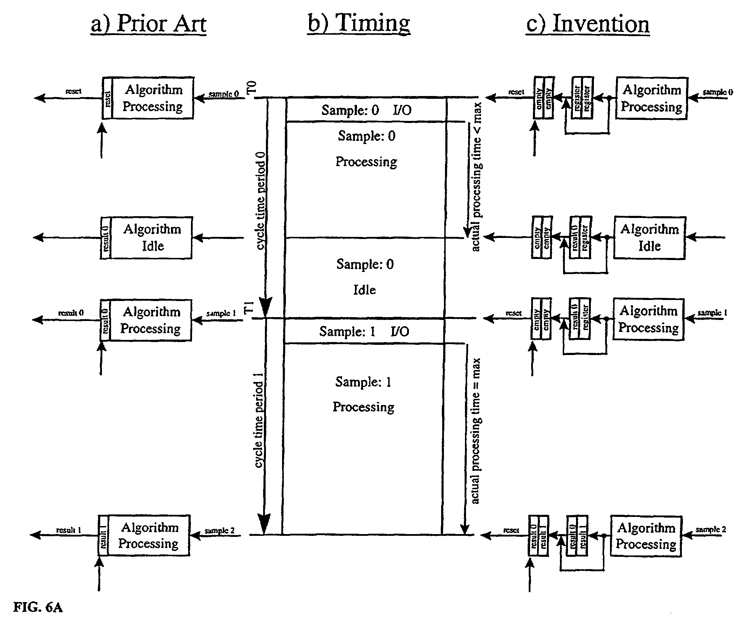

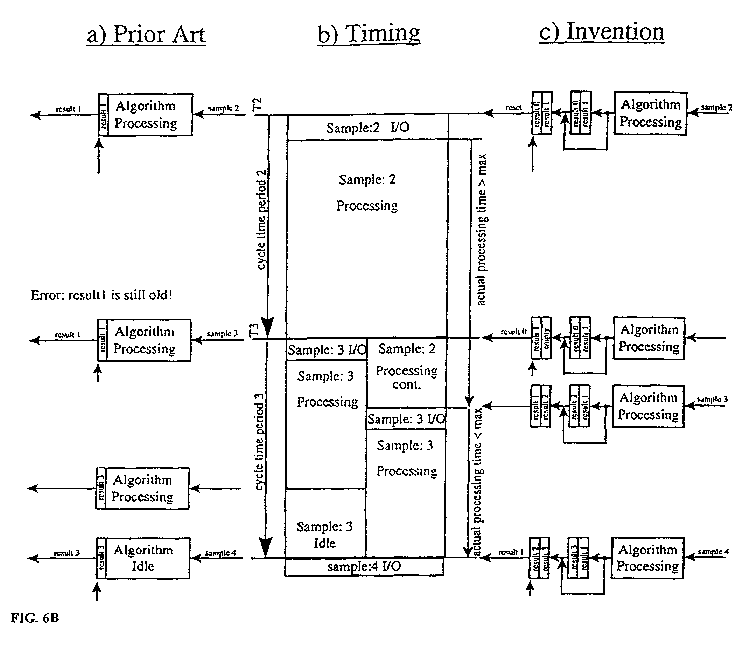

Referring to Fig. 5 and 6A and 6B, the prior art system 200 of Fig. 2 having only a maximum processing performance equal to the average performance and a system 100 of Fig. 2 having the same processing performance are compared. Fig. 5 shows in a) a scheme of the processing performed in DSP 30 in the reception path and in b) a scheme of the processing performance in system 100 using DSP 3 and FIFO 5 in the reception path. These schemes are shown in Fig. 6A and 6B in a) for the prior art system and in c) for the preferred embodiment, indicating the corresponding data on the connections and in the registers and pipeline. Fig. 6A and 6B show in b) the timing resulting from the system characteristics and the systems requirements.

At time T0, at the first rising edge of sampling signal 31 resulting in the first interrupt after the channel is enabled, the DSP 3 is activated. The first input sample for the reception path (=sample 0) is input (I/O) and the processing is started. After completing the processing, DSP 30 stores the result of the processing of sample 0 (=result 0) in its output register 30. DSP 3 stores the result 0 in the first stage of the 2-stage data pipeline. The processing time necessary to process sample 0 is less than the maximum possible processing time within one cycle time period. Thus, the processing of the sample 0 is completed before the end of the first cycle time period. DSPs 3 and 30 are both idle for the rest of the first cycle time period.

At time T1, at the second rising edge of sampling signal 31 resulting in the second interrupt, prior art DSP 30 outputs result 0 to PCM CODEC 2, whereas DSP 3 outputs a reset signal to FIFO 5. Both DSPs fetch the second input sample for the reception path (=sample 1) and start its processing. After completing the processing, DSP 30 stores the result of the processing of sample 1 (=result 1) in its output register 30. DSP 3 stores result 1 in the second stage of the 2-stage data pipeline. The processing time necessary to process sample 1 equals the maximum possible processing time within one cycle time period. Thus, the processing of the sample 0 is completed just at the end of the second cycle time period.

At time T2, at the third rising edge of sampling signal 31 resulting in the third interrupt, prior art DSP 30 outputs result 1 to PCM CODEC 2, whereas DSP 3 transfers the content of the 2 stage data pipeline to FIFO 5. Both DSPs fetch the third input sample for the reception path (=sample 2) and start its processing. However, the processing time necessary to process sample 2 exceeds the maximum possible processing time within one cycle time period.

Therefore, in the prior art system 200, at time T3, at the fourth rising edge of sampling signal 31 resulting in the fourth interrupt, result 1 is still present in the output register of DSP 30. Therefore, DSP 30 outputs the same old result 1 to PCM CODEC 2 at time T3. Furthermore, DSP 30 immediately processes an input new data sample. Therefore, the processing of sample 2 is interrupted and sample 2 which is not yet completely processed, is overwritten by the newly applied fourth input data sample (=sample 3).

In the system 100 of the preferred embodiment, at time T3, at the fourth rising edge of sampling signal 31 resulting in the fourth interrupt, the first output data sample (=result 0) is output at time T3 resulting in an empty stage in two-stage FIFO 5. No system response requirement violation occurs. Furthermore, the interrupt is not immmediately processed by DSP 3 but buffered. Thus, it is prevented in system 100 that sample 2 is overwritten by sample 3. The DSP 3 completes the processing of sample 2. After completing the processing of sample 2 at time T3', DSP 3 writes the resulting third output data sample (=result 2) into the last stage of the data pipeline and transfers, at the same time because the interrupt was buffered, result 2 to FIFO 5, fetches the the fourth input data sample (=sample 3), and starts its processing, as shown in Fig. 6B.

At the time T3' DSP 30 already processes sample 3. However, because of the system characteristics, namely the heterogeneous processing algorithm, and/or the content of the data, the processing time necessary to process sample 3 is less than the maximum possible processing time within one cycle period. After completing the processing, DSP 30 stores the result of the processing of sample 3 (=result 3) in the output register 30. Thus, the processing of sample 3 is completed by DSP 30 within cycle time period 3 followed by an idle phase. System 100 acoording to the preferred embodiment uses this time to compensate the delay resulting from the processing of sample 2. DSP 3 stores result 3 in the last stage of the data pipeline. At the end of the fourth cycle time period both systems 100 and 200 have finished the processing of the fourth input data frame (sample 3).

At time T4, at the fifth rising edge of sampling signal 31 resulting in the fifth interrupt, prior art DSP 30 outputs result 3 to PCM CODEC 2, whereas FIFO 5 outputs result 1 and DSP 3 transfers the content of the last stage of the data pipeline (i.e.result 3) to FIFO 5. Both DSPs fetch the fifth input sample for the reception path (=sample 4) and start their processing.

As can be seen from the above describtion, system 100 according to the preferred embodiment allows to use a DSP having a lower maximum processing performance without violating the system response requirements. The propagation delay in the reception path of n cycle time periods, in the described example of 250 µs for n = 2, is negligible.

The present invention was described referring to a preferred embodiment used in a DECT environment including a subband DTMF detection defining a predetermined cycle time period via a sampling signal 31 and requiring a data output to and a data input from the PCM CODEC interface 2 every cycle time period.

However, the invention is of course not only applicable to a DECT environment but to all environments having a predetermined cycle time period and requiring a data output/input every cycle time period and having non-uniform processing performances for different cycle time periods. The number of stages of the FIFO in the putput or input connection determines the propagation delay. Considering the system requirements, the sampling frequency and the inhomogenity of the algorithm, it is of course possible to select another number n of stages of the FIFO. Of course it is possible to implement these stages in another memory device than a FIFO. It is only necessary to keep the order of the respective data samples.

## Claims

1. A data processing system for use in an environment having a predetermined cycle time period and requiring a data output and/or a data input every cycle time period, in particular a digital enhanced cordless telephone DECT environment, the system comprising:
an input data connection (22; 12, 4, 13),
an output data connection (23, 5, 24; 14) and
a first data processing means (3) connected to the input data connection (22; 12, 4, 13) and the output data connection (23, 5, 24; 14) and receiving input data via the input data connection, for processing the input data according to a heterogeneous processing algorithm to produce output data outputted to the output data connection (23, 5, 24; 14), the input data and/or the output data each having a predetermined sample size,
**characterized in that** the output data connection (23, 5, 24) and/or the input data connection (12, 4, 13) comprise a data memory means (5; 4) for storing the input data and/or the output data and having a storage capacity of n corresponding maximum sample sizes, n being an integer equal to or larger than 2.

2. The data processing system according to claim 1, wherein the input data connection comprises a first input branch (22) connected to a first data interface (1),
the output data connection includes a first output branch (23,5,24) requiring a data output every cycle time period,
the first input branch (22), the first data processing means (3) and the first output branch (23, 5, 24) form a first data path,
the first data processing means (3) outputs an output data sample for the first data path depending on the actual processing time of the heterogen algorithm for a corresponding input data sample, and
the data memory means comprises a first data memory unit (5) connected into the first output branch and having a storage capacity of n of the predetermined sample sizes of output data samples for the first data path.

3. The data processing system according to claim 1 or 2, wherein
the input data connection comprises a second input branch (12, 4, 13) connected to a second data interface (2) requiring a data input every cycle time period,
the output data connection comprises a second output branch (14),
the second input branch, the first data processing means (3) and the second output branch (14), form a second data path,
the data memory means comprises a second data memory unit (4) connected into the second input branch (12, 4, 13) and having a storage capacity of n of the predetermined sample sizes of input data for the second data path, and
the first data processing means (3) outputs an output data sample for the second data path depending on the actual processing time of the heterogen algorithm for a corresponding input data sample for the second output branch (14).

4. The data processing system according to claim 2 or 3, wherein
the first data processing means is a digital signal processor (3) including an at least temporary n-stage data pipeline for the output data samples for the first data path and a control unit (45),
the first data memory unit is a first n-stage FIFO register (5), and
the control unit (45), upon start of processing, controls the data pipeline to store the first to n-th output data samples for the first data path and to transfer these n output data samples to the first n-stage FIFO register (5) at the start of processing of the (n+1)-th input data sample for the data path, and succesively controls the data pipeline to store each succeeding output data sample for the first data path and to transfer the same to the first FIFO register (5) at the start of processing of the next input data sample for the first data path.

5. The data processing system according to claims 3 or 4, wherein
the first data processing means is a digital signal processor (3) including a control unit (45),
the second data memory unit is a second n-stage FIFO register (4), and
the control unit (45), upon start of processing, clears the second n-stage FIFO register (4) and controls the digital signal processor (3) to start processing the first input data sample for the second data path after the second cycle time period.

6. The data processing system according to one of claims 1 to 5, wherein
the first data processing means is a digital signal processor (3) for a DECT system including a subband DTMF detection.

7. The data processing system according to one of claims 1 to 6, wherein
the first data interface is a DECT backbone interface (1) connected to the first input branch (22) and the second output branch (14) and to a DECT backbone (15, 21), and
the second data interface is a data interface of a second data processing means (2) for PCM coding and PCM decoding, connected to the first output branch (23, 5, 24) and the second input branch (12, 4, 13).

8. The data processing system according to one of claims 2 to 7, wherein
the first data path is a reception data path and the second data path is a transmission data path.

9. A data processing method for use in an environment having a predetermined cycle time period and requiring a data output every cycle time period, in particular a digital enhanced cordless telephone DECT environment, the method comprising the steps of
processing successive input data samples according to a heterogeneous algorithm to produce corresponding successive output data samples, and
storing, upon start of processing, the first to n-th output data samples and outputting the successive output data samples in order, starting after the (n+1)-th cycle time period, n being an integer equal to or larger than 2.

10. A data processing method for use in an environment having a predetermined cycle time period and requiring a data input every cycle time period, in particular a digital enhanced cordless telephone DECT environment, the method comprising the steps of
processing successive input data samples according to a heterogeneous algorithm to produce corresponding successive input data samples, and
storing, upon start of processing, the first to n-th input data samples and starting the processing of the successive input data samples in order, starting after the second cycle time period, n being an integer equal to or larger than 2.

## Patentansprüche

1. Datenverarbeitungssystem zum Benutzen in einer Umgebung mit einer vorbestimmten Zykluszeitdauer, das eine Datenausgabe und/oder eine Dateneingabe benötigt, insbesondere eine digitale verstärkte DECT-Umgebung eines schnurlosen Telefons, wobei das System aufweist:
eine Eingangsdatenverbindung (22; 12, 4, 13),
eine Ausgangsdatenverbindung (23, 5, 24; 14) und
ein erstes Datenverarbeitungsmittel (3), das mit der Eingangsdatenverbindung (22; 12, 4, 13) und der Ausgangsdatenverbindung (23, 5, 24; 14) verbunden ist und Eingangsdaten über die Eingangsdatenverbindung empfängt, zum Verarbeiten der Eingangsdaten gemäß einem heterogenen Verarbeitungsalgorithmus zum Erzeugen von Ausgangsdaten, die an die Ausgangsdatenverbindung (23, 5, 24; 14) ausgegeben werden, wobei die Eingangsdaten und/oder die Ausgangsdaten jeweils einen vorbestimmten Stichprobenumfang aufweisen,
**dadurch gekennzeichnet,**
**dass** die Ausgangsdatenverbindung (23, 5, 24; 24) und/oder die Eingangsdatenverbindung (12, 4, 14) ein Datenspeichermittel (5; 4) aufweisen zum Speichern der Eingangsdaten und/oder der Ausgangsdaten und mit einer Speicherkapazität von n entsprechenden maximalen Stichprobenumfängen, wobei n eine ganze Zahl gleich oder größer 2 ist.

2. Datenverarbeitungssystem nach Anspruch 1, bei dem die Eingangsdatenverbindung einen ersten Eingangszweig (22) aufweist, der mit einer ersten Datenschnittstelle (1) verbunden ist,
die Datenausgangsverbindung einen ersten Ausgangszweig (23, 5, 24) aufweist, der eine Datenausgabe für jede Zykluszeitdauer benötigt,
der erste Eingangszweig (22), das erste Datenverarbeitungsmittel (3) und der erste Ausgangszweig (23, 5, 24) einen ersten Datenpfad bilden,
das erste Datenverarbeitungsmittel (3) eine Ausgangsdatenstichprobe für den ersten Pfad in Abhängigkeit der tatsächlichen Verarbeitungszeit des heterogenen Algorithmus für eine entsprechende Eingangsdatenstichprobe ausgibt, und
das Datenspeichermittel eine erste Datenspeichereinheit (5) aufweist, die mit dem ersten Ausgangszweig verbunden ist und
eine Speicherkapazität von n der vorbestimmten Stichprobenumfänge der Ausgangsdatenstichproben für den ersten Datenpfad aufweist.

3. Datenverarbeitungssystem nach Anspruch 1 oder 2, bei dem
die Eingangsdatenverbindung einen zweiten Eingangszweig (12, 4, 13) aufweist, der mit einer zweiten Datenschnittstelle (2) verbunden ist, die eine Dateneingabe für jede Zykluszeitdauer benötigt,
die Ausgangsdatenverbindung einen zweiten Ausgangszweig (14) aufweist;
der zweite Eingangszweig, das erste Datenverarbeitungsmittel (3) und der zweite Ausgangszweig (14) einen zweiten Datenpfad bilden,
das Datenspeichermittel eine zweite Datenspeichereinheit (4) aufweist, die mit dem zweiten Eingangszweig (12, 4, 13) verbunden ist und eine Speicherkapazität von n der vorbestimmten Stichprobenumfänge von Eingangsdaten für den zweiten Datenpfad aufweist, und
das erste Datenverarbeitungsmittel (3) eine Ausgangsdatenstichprobe für den zweiten Datenpfad in Abhängigkeit der tatsächlichen Verarbeitungszeit des heterogenen Algorithmus für eine entsprechende Eingangsdatenstichprobe für den zweiten Ausgangszweig (14) ausgibt.

4. Datenverarbeitungssystem nach Anspruch 2 oder 3, bei dem das erste Datenverarbeitungsmittel ein digitaler Signalprozessor (3) mit einer mindestens zeitweiligen n-stufigen Datenpipeline für die Ausgangsdatenstichproben für den ersten Datenpfad und einer Steuereinheit (45) ist,
die erste Datenspeichereinheit ein erstes n-Stufen-FIFO-Register (5) ist und
die Steuereinheit (45) nach dem Start der Verarbeitung die Datenpipeline zum Speichern der ersten bis n-ten Ausgangsdatenstichproben für den ersten Datenpfad und zum Übertragen dieser n Ausgangsdatenstichproben zu dem ersten n-Stufen-FIFO-Register (5) an dem Start der Verarbeitung der (n + 1)-ten Eingangsdatenstichprobe für den Datenpfad steuert und
aufeinanderfolgend die Datenpipeline zum Speichern jeder aufeinanderfolgenden Ausgangsdatenstichprobe für den ersten Datenpfad und zum Übertragen derselben zu dem ersten FIFO-Register (5) an dem Start der Verarbeitung der nächsten Eingangsdatenstichprobe für den ersten Datenpfad steuert.

5. Datenverarbeitungssystem nach Anspruch 3 oder 4, bei dem
das erste Datenverarbeitungsmittel ein digitaler Signalprozessor (3) mit einer Steuereinheit (45) ist, die zweite Datenspeichereinheit ein zweites n-Stufen-FIFO-Register (4) ist und
die Steuereinheit (45) auf den Start der Verarbeitung das zweite n-Stufen-FIFO-Register (4) löscht und den digitalen Signalprozessor (3) steuert zum Starten der Verarbeitung der ersten Eingangsdatenstichprobe für den zweiten Datenpfad nach der zweiten Zykluszeitdauer.

6. Datenverarbeitungssystem nach einem der Ansprüche 1 bis 5, bei dem das erste Datenverarbeitungsmittel ein digitaler Signalprozessor (3) für ein DECT-System einschließlich einer Unterband-DTMF-Erfassung ist.

7. Datenverarbeitungssystem nach einem der Ansprüche 1 bis 6, bei dem die erste Datenschnittstelle eine DECT-Haupttrassenschnittstelle (1) ist, die mit dem ersten Eingangszweig (22) und dem zweiten Ausgangszweig (14) und mit einer DECT-Haupttrasse (15, 21) verbunden ist, und
die zweite Datenschnittstelle eine Datenschnittstelle eines zweiten Datenverarbeitungsmittels (2) für PCM-Codierung und PCM-Decodierung ist, die mit dem ersten Ausgangszweig (23, 5, 24) und dem zweiten Eingangszweig (12, 4, 13) verbunden ist.

8. Datenverarbeitungssystem nach einem der Ansprüche 2 bis 7, bei dem der erste Datenpfad ein Empfangsdatenpfad ist und der zweite Datenpfad ein Übertragungsdatenpfad ist.

9. Datenverarbeitungsverfahren zur Benutzung in einer Umgebung mit einer vorbestimmten Zykluszeitdauer, das eine Datenausgabe in jeder Zykluszeitdauer benötigt, insbesondere eine digitale verstärkte DECT-Umgebung eines schnurlosen Telefons, wobei das Verfahren die Schritte aufweist
Verarbeiten von aufeinanderfolgenden Eingangsdatenstichproben gemäß einem heterogenen Algorithmus zum Erzeugen entsprechender aufeinanderfolgender Ausgangsdatenstichproben und
Speichern auf den Start der Verarbeitung hin der ersten bis der n-ten Ausgangsdatenstichproben und Ausgeben der aufeinanderfolgenden Ausgabedatenstichproben in der Reihenfolge, wobei nach der (n + 1)-ten Zykluszeitdauer gestartet wird, wobei n eine ganze Zahl gleich oder größer als 2 ist.

10. Datenverarbeitungsverfahren zur Benutzung in einer Umgebung mit einer vorbestimmten Zykluszeitdauer, das eine Dateneingabe in jeder Zykluszeitdauer benötigt, insbesondere eine digitale verstärkte DECT-Umgebung eines schnurlosen Telefons, wobei das Verfahren die Schritte aufweist Verarbeiten von aufeinanderfolgenden Eingangsdatenstichproben gemäß einem heterogenen Algorithmus zum Erzeugen entsprechender aufeinanderfolgender Eingangsdatenstichproben und
Speichern auf den Start der Verarbeitung hin der ersten bis der n-ten Eingangsdatenstichprobe und Starten der Verarbeitung der aufeinanderfolgenden Eingangsdatenstichproben in der Reihenfolge, wobei nach der zweiten Zykluszeitdauer gestartet wird, wobei n eine ganze Zahl gleich oder größer als 2 ist.

## Revendications

1. Système de traitement de données pour utilisation dans un environnement ayant une période de temps de cycle prédéterminée et demandant une sortie de données et/ou une entrée de données à chaque période de temps de cycle, en particulier dans un environnement DECT (téléphone sans fil numérique évolué), le système comprenant :
une connexion de données d'entrée (22 ; 12, 4, 13),
une connexion de données de sortie (23, 5, 24 ; 14) et un premier moyen de traitement de données (3) relié à la connexion de données d'entrée (22 ; 12, 4, 13) et à la connexion de données de sortie (23, 5, 24 ; 14) et recevant les données d'entrée via la connexion de données d'entrée, pour le traitement des données d'entrée en conformité avec un algorithme de traitement hétérogène pour produire des données de sortie allant vers la connexion de données de sortie (23, 5, 24 ; 14), les données d'entrée et/ou les données de sortie ayant chacune une taille d'échantillon prédéterminée,
**caractérisé en ce que** la connexion de données de sortie (23, 5, 24) et/ou la connexion de données d'entrée (12, 4, 13) comprennent un moyen de mémoire de données (5 ; 4) pour mémoriser les données d'entrée et/ou les données de sortie et ayant une capacité de mémorisation de n tailles d'échantillon maximales correspondantes, n étant un nombre entier égal à ou supérieur à 24.

2. Système de traitement de données selon la revendication 1, dans lequel la connexion de données d'entrée inclut une première branche d'entrée (22) reliée à une première interface de données (1),
la connexion de données de sortie comprend une première branche de sortie (23, 5, 24) demandant une sortie de données à chaque période de temps de cycle,
la première branche d'entrée (22), le premier moyen de traitement de données (3) et la première branche de sortie (23, 5, 24) forment un premier trajet de données,
le premier moyen de traitement de données (3) sort un échantillon de données de sortie pour le premier trajet de données en fonction du temps de traitement réel de l'algorithme hétérogène pour un échantillon de données d'entrée correspondant, et
le moyen de mémoire de données comprend une première unité de mémoire de données (5) connectée à la première branche de sortie et ayant une capacité de mémorisation de n des tailles d'échantillon prédéterminées des échantillons de données de sortie pour le premier trajet de données.

3. Système de traitement de données selon la revendication 1 ou 2, dans lequel
la connexion de données d'entrée comprend une seconde branche d'entrée (12, 4, 13) reliée à une seconde interface de données (2) demandant une entrée de données à chaque période de temps de cycle,
la connexion de données de sortie comprend une seconde branche de sortie (14),
la seconde branche d'entrée, le premier moyen de traitement de données (3) et la seconde branche de sortie (14) forment un second trajet de données,
le moyen de mémoire de données comprend une seconde unité de mémoire de données (4) connectée à la seconde branche d'entrée (12, 4, 13) et ayant une capacité de mémorisation de n des tailles d'échantillon prédéterminées de données d'entrée pour le second trajet de données, et le premier moyen de traitement de données (3) sort un échantillon de données de sortie pour le second trajet de données en fonction du temps de traitement réel de l'algorithme hétérogène pour un échantillon de données d'entrée correspondant pour la seconde branche de sortie (14).

4. Système de traitement de données selon la revendication 2 ou 3, dans lequel
le premier moyen de traitement de données est un processeur de signaux numériques (3) incluant au moins un pipeline de données à n étages temporaire pour les échantillons de données de sortie pour les premier trajet de données et unité de commande (45),
la première unité de mémoire de données est un premier registre premier entré premier sorti à n étages (5) et,
l'unité de commande (45), sur lancement du traitement commande le pipeline de données pour mémoriser les premier au énième échantillons de données de sortie pour le premier trajet de données et pour transférer ces n échantillons de données de sortie au premier registre premier entré premier sorti à n étages (5) au lancement du traitement du (n+1) iéme échantillon de données d'entrée pour le trajet de données et pour commander successivement le pipeline de données pour mémoriser chaque échantillon de données de sortie suivant pour le premier trajet de données et pour transférer celui-ci au premier registre premier entré premier sorti (5) au lancement du traitement de l'échantillon de données d'entrée suivant pour le premier trajet de données.

5. Système de traitement de données selon la revendication 3 on 4, dans lequel
le premier moyen de traitement de données est un processeur de signaux numériques (3) incluant une unité de commande (45),
la seconde unité de mémoire de données est un second registre premier entré premier sorti à n étages (4) et
l'unité de commande (45), sur lancement de traitement efface le second registre premier entré premier sorti à n étages (4) et commande le processeur de signaux numériques (3) pour lancer le traitement du premier échantillon de données d'entrée pour le second trajet de données après la seconde période de temps de cycle.

6. Système de traitement de données selon l'une quelconque des revendications 1 à 5, dans lequel
le premier moyen de traitement de données est un processeur de signaux numériques (3) pour un système DECT incluant une détection DTMF de sous-bande.

7. Système de traitement de données selon l'une quelconque des revendications 1 à 6, dans lequel
la première interface de données est une interface de base DECT (1) connectée à la première branche d'entrée (22) et à la seconde branche de sortie (14) et à un réseau DECT (15, 21) et la seconde interface de données est une interface de données d'un second moyen de traitement de données (2) pour le codage MIC et le décodage MIC, connectée à la première branche de sortie (23, 5, 24) et à la seconde branche d'entrée (12, 4, 13).

8. Système de traitement de données selon l'une quelconque des revendications 2 à 7, dans lequel
le premier trajet de données est un trajet de données de réception et le second trajet de données est un trajet de données d'émission.

9. Procédé de traitement de données pour utilisation dans un environnement ayant une période de temps de cycle prédéterminée et demandant une sortie de données à chaque période de temps de cycle, en particulier dans un environnement DECT (téléphone sans fil numérique évolué), le procédé comprenant les étapes de:
traitement des échantillons de données d'entrée successifs en conformité avec un algorithme hétérogène pour produire des échantillons de données de sortie successifs correspondant, et
mémorisation, sur lancement du traitement, des premier au éniéme échantillons de données de sortie et sortie des échantillons de données de sortie successifs dans l'ordre, en commençant après la (n + 1) iéme période de temps de cycle, 1 étant un nombre entier égal ou supérieur à 2.

10. Procédé de traitement de données pour utilisation dans un environnement ayant une période de temps de cycle prédéterminée et demandant une entrée de données à chaque période de temps de cycle, en particulier dans un environnement DECT (téléphone sans fil numérique évolué), le procédé comprenant les étapes de:
traitement des échantillons de données d'entrée successifs en conformité avec un algorithme hétérogène pour produire des échantillons de données d'entrée successifs et
mémorisation, sur lancement du traitement, des premier au éniéme échantillons de données d'entrée et de lancement du traitement des échantillons de données d'entrée successifs dans l'ordre, en commençant après la seconde période de temps de cycle, n étant un nombre entier égal ou supérieur à 2.
